# EUROPÄISCHE PATENTSCHRIFT

(11) **EP 2 724 801 B1**
(45) Veröffentlichungstag und Bekanntmachung des Hinweises auf die Patenterteilung: **09.12.2020**
(21) Anmeldenummer: 12190075.7
(22) Anmeldetag: 26.10.2012
(51) Int. Cl.: B23B 31/28, B23B 31/16

(54) **Spannaggregat**
Tensioning assembly
Agrégat de serrage

(43) Veröffentlichungstag der Anmeldung: 30.04.2014
(73) Patentinhaber: Hiestand, Karl, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 384 839
- US-A- 4 567 794
- US-A1- 2002 158 520

## Beschreibung

Die Erfindung bezieht sich auf ein Spannaggregat gemäß dem Oberbegriff des Anspruchs 1. Ein solches Spannaggregat ist aus der EP 2 384 839 A bekannt.

Durch die EP 0344451 A1 ist eine Vorrichtung zur lösbaren Verbindung eines als Kraftspannfutter ausgebildeten Werkstückträgers mit einem Betätigungsglied bekannt, bei der zwei koaxial hintereinander angeordnete und pneumatisch betätigbare Servo-Einrichtungen in Form von in Zylindern eingesetzten Kolben vorgesehen sind, um in kurzer Zeit einen Wechsel des Kraftspannfutters vornehmen zu können. Über die Kolbenstange des Betätigungsgliedes der einen Servo-Einrichtung kann hierbei mittels Keilhaken auf die Spannbacken des Kraftspannfutters eingewirkt werden. Die Kolbenstange der anderen Servo-Einrichtung ist dagegen über eine weitere axial verschiebbare Zugstange mit einem Kupplungsglied verbunden. Das Lösen und Wiederherstellen der Triebverbindung zwischen dem Betätigungsglied der einen Servo-Einrichtung und einem in dem Kraftspannfutter angeordneten Spannkolben wird mit Hilfe des der zweiten Servo-Einrichtung zugeordneten in besonderer Weise ausgebildeten Betätigungsgliedes bewerkstelligt.

Die Verbindung zwischen dem Betätigungsglied und dem Spannkolben des Kraftspannfutters kann somit zwar mittels des weiteren Verstellgliedes zuverlässig hergestellt oder gelöst werden, der Bauaufwand ist jedoch erheblich. Außerdem wird durch die axial hintereinander angeordneten Servo-Einrichtungen ein relativ großer Bauraum beansprucht, so dass der Einsatzbereich dieser bekannten Vorrichtung auf den angegebenen Zweck beschränkt ist.

Aufgabe der Erfindung ist es dagegen, ein Spannaggregat der eingangs genannten Gattung in der Weise auszubilden, dass die Funktionalität und damit der Einsatzbereich des Spannaggregates in einem erheblichen Maße erweitert wird. Vor allem soll erreicht werden, dass zusätzlich zu der Betriebsweise eines elektrisch betätigbaren Spannaggregates durch Ausnutzung der vorhandenen Bauteile, wie zum Beispiel des Antriebsmotors, mittels diesem weitere Hilfseinrichtungen betätigbar sind. Durch den Antriebsmotor des Spannaggregates soll somit zum Beispiel ein zentraler Anschlag im Kraftspannfutter oder ein Drehmitnehmer eingestellt bzw. angetrieben werden können, ohne dass die Funktion des Spannaggregates ungünstig beeinflusst wird. Mit geringem Bauaufwand können demnach mittels des vorschlagsgemäß auszubildenden Spannaggregates weitere Arbeitsgänge vorgenommen werden, so dass dessen Rentabilität gesteigert wird.

Gemäß der Erfindung wird ein Spannaggregat mit den Merkmalen des Anspruchs 1 ausgestattet

Das Schaltglied kann hierbei zweckmäßigerweise in einem vorzugsweise zweiteilig ausgebildeten Gehäuse als Zwischenstück drehbar gelagert sein, das mit dem Spindelstock der Werkzeugmaschine drehfest verbunden und gesteuert axial verschiebbar gelagert ist, wobei dieses auf mehreren vorzugsweise gleichmäßig über den Umfang verteilt angeordneten Führungsbolzen abgestützt ist, die in ortsfest angeordneten bzw. an dem Spindelstock befestigten Trägern verschiebbar eingesetzt sind.

Zur gesteuerten axialen Verschiebung des das Schaltglied aufnehmenden Gehäuse ist es angebracht, eine Servo-Einrichtung in Form eines in einen Zylinder eingesetzten und beidseitig von Druckmittel beauflagbaren Kolbens vorzusehen, dessen Kolbenstange mit dem Schaltglied in Triebverbindung steht.

Der Antriebsmotor kann hierbei ortsfest an dem Gehäuse oder einem der mit dem Spindelstock verbundenen Trägern abgestützt sein, und die Abtriebswelle des Antriebsmotors sollte formschlüssig mit dem Schaltglied verbunden bzw. mit diesem koppelbar sein.

In Betriebsstellung des Spannaggregates sollte dieses mit einer dessen Bauteile aufnehmenden und mit der Maschinenspindel drehfest verbundenen Glocke lösbar verriegelbar sein, um ein selbsttätiges Lösen eines eingespannten Werkstückes sicher auszuschließen.

Zur formschlüssigen Verbindungen des Spannaggregates mit der Glocke ist es angezeigt, in diese oder ein Zwischenglied eine oder mehrere Federrasten einzusetzen, die in den Endstellungen des Schaltgliedes mittels an diesem oder dem Gehäuse angeformten Anschläge oder unmittelbar durch das Schaltglied entsperrbar sind.

Das Schaltglied sollte in den beiden Endstellungen über seitlich an diesem angebrachte Stirnverzahnungen oder Reibbelägen wechselweise mit dem Spannaggregat oder dem als Mutter ausgebildeten Zwischenglied, das mit dem Verstellglied über Gewinde zur Umwandlung der Drehbewegungen des Antriebsmotors in axiale Verstellbewegungen trieblich verbunden ist, form- und kraftschlüssig koppelbar sein. Angebracht ist es auch, das Zwischenglied als zweiteilige Ringscheibe auszubilden, deren beide Teile drehfest und verschiebbar aufeinander gelagert und zwischen denen eine oder mehrere Druckfedern angeordnet sind, derart, dass das mit dem Schaltglied zusammenwirkende Ringteil die Federraste bildet.

Vorteilhaft ist es des Weiteren das Schaltglied mit einem Eingangsglied des Spannaggregates bzw. der Glocke und/oder dem Zwischenglied und/oder dieses mit der Glocke jeweils über Stirnverzahnungen formschlüssig miteinander zu verbinden.

Das Schaltglied ist zweckmäßigerweise im Querschnitt umgekehrt T-förmig auszubilden, wobei dessen radial nach außen gerichteter Steg mit dem Antriebsmotor koppelbar ist und an dessen waagrecht verlaufenden Stegen die Stirnverzahnungen angearbeitet sind.

Zur Ermittlung des jeweiligen Betriebszustandes des zugeordneten Bauteils können das Gehäuse und/oder das Zwischenglied und/oder das Spannaggregat mit Wegmesseinrichtungen versehen sein.

Der Bewegungswandler des Spannaggregates kann durch mehrere mit Abstand zu dessen Längsachse und gleichmäßig über den Umfang verteilt angeordnete Kugel- oder Planetenrollspindeln gebildet sein, die durch das Verstellglied betätigbare Hilfseinrichtungen können als axial einstellbarer Anschlag, als Drehmitnehmer oder als Körnerspitze ausgebildet werden.

Wird ein Spannaggregat gemäß der Erfindung zusätzlich mit einem Schaltglied ausgestattet, so ist es möglich, mit Hilfe des Antriebsmotors des Spannaggregates dieses nicht nur in der erforderlichen Weise anzutreiben, sondern auch unterschiedlich ausgebildete Hilfseinrichtungen zu betätigen, so dass das Spannaggregat für weitere Arbeitsgänge genutzt werden kann. Mit Hilfe des Schaltgliedes könnten nämlich Triebverbindungen unter Umgehung des Spannaggregates mit den Hilfseinrichtungen ohne Schwierigkeiten und in kurzer Zeit hergestellt werden, ohne dass die Funktion des Spannaggregates dadurch beeinflusst wird. Der dazu erforderliche Bauaufwand ist gering. Auch wird die Baugröße nicht ungünstig beeinflusst. Demnach sind auf einer Werkzeugmaschine weitere Arbeitsvorgänge problemlos zu bewerkstelligen, und zwar ohne dass das Spannaggregat ausgetauscht werden muss. Eine sichere Betriebsweise des Spannaggregates ist dabei stets gegeben, da dieses mit Hilfe des Schaltgliedes in Betriebszuständen, in denen eine Hilfseinrichtung eingesetzt wird, leicht zu neutralisieren ist.

In der Zeichnung ist ein Ausführungsbeispiel des gemäß der Erfindung ausgebildeten Spannaggregates dargestellt, das nachfolgend im Einzelnen näher erläutert ist. Hierbei zeigt:
- Figur 1: das Spannaggregat mit eingespanntem Werkstück und das dem Antriebsmotor zugeordnete Schaltglied, teilweise im Schnitt und in Ansicht, in Mittelstellung des Schaltgliedes,
- Figuren 2 und 3: jeweils einen Ausschnitt aus Figur 1 in vergrößerter Wiedergabe, in den beiden Endstellungen des Schaltgliedes,
- Figur 4: eine Ausführungsvariante nach Figur 1 mit gesteuert antreibbaren Kraftspannfutter und
- Figur 5: unterschiedlich ausgebildete, bei dem Spannaggregat nach Figur 1 zusätzlich einsetzbare Hilfseinrichtungen, in einer vergrößerten Wiedergabe.

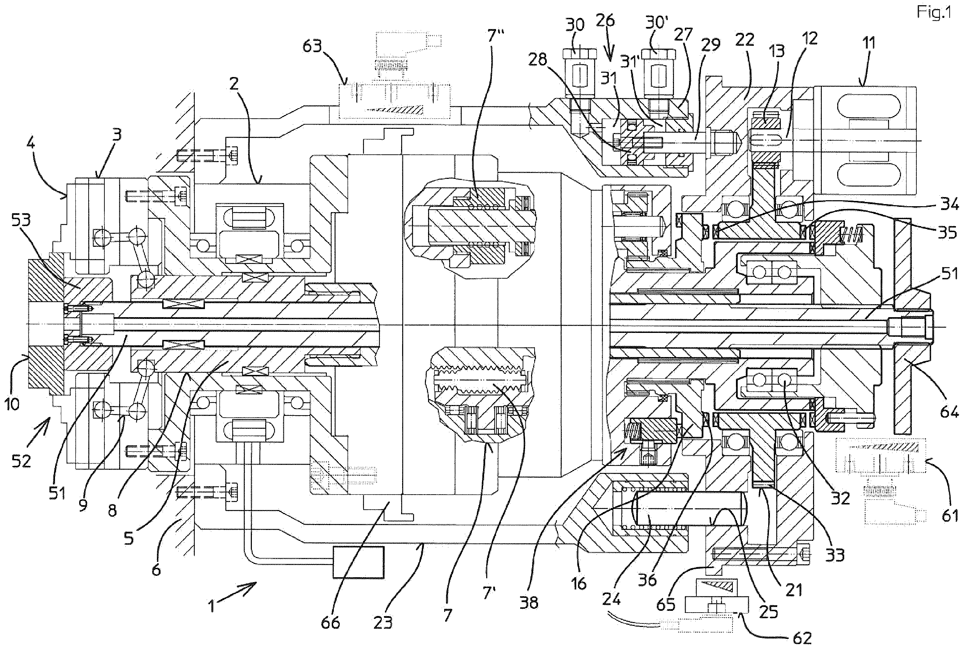

Das in den Figuren 1 bis 5 dargestellte und mit 1 bezeichnete Spannaggregat dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 lösbar einzuspannen ist. Die Spannbacken 4 sind hierbei über Umlenkhebel 9 durch eine axial verstellbare Zugstange 8 betätigbar, die über einen Bewegungswandler 7 mit einem umschaltbaren elektrischen Antriebsmotor 11 in Triebverbindung steht. Mittels des ausschnittsweise dargestellten Bewegungswandlers 7, der aus mehreren Kugelrollspindeln 7' oder Planetenrollspindeln 7" bestehen kann, werden die rotatorischen Verstellbewegungen des AntriebsMotors 11 in axiale Verstellbewegung der Zugstange 8 umgewandelt.

Das Spannaggregat 1 ist auf der Maschinenspindel 5 der Werkzeugmaschine 2 angeordnet und über diese mit dem Kraftspannfutter 3, das aus einem Spindelstock 6 herausragt, verbunden. Als Spannaggregat 1 können Ausgestaltungen gewählt werden, die beispielsweise durch die EP 2 384 839 A1 oder EP 11174513.9 offenbart sind.

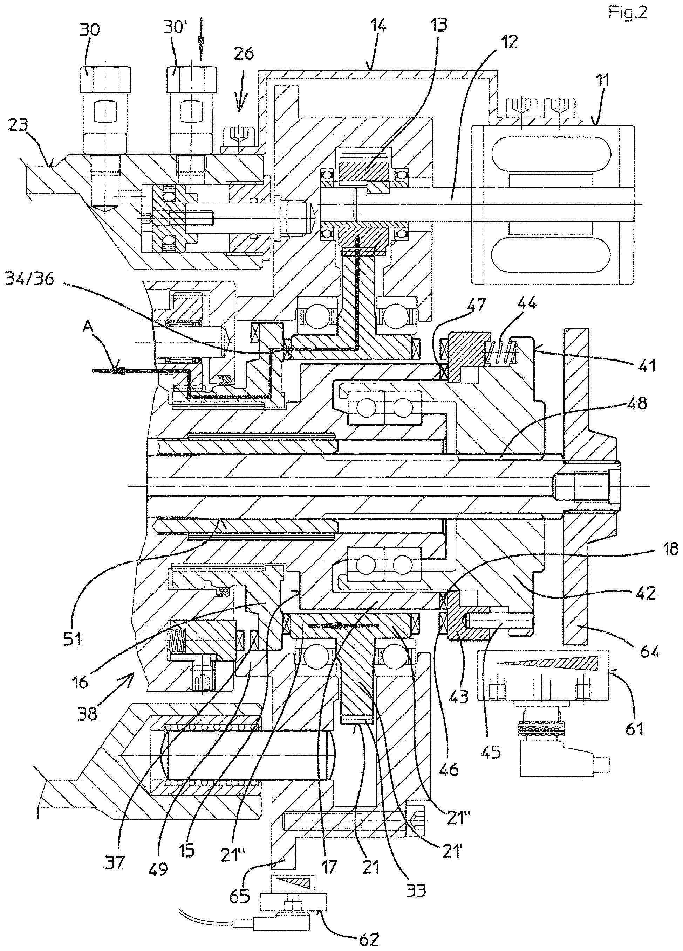

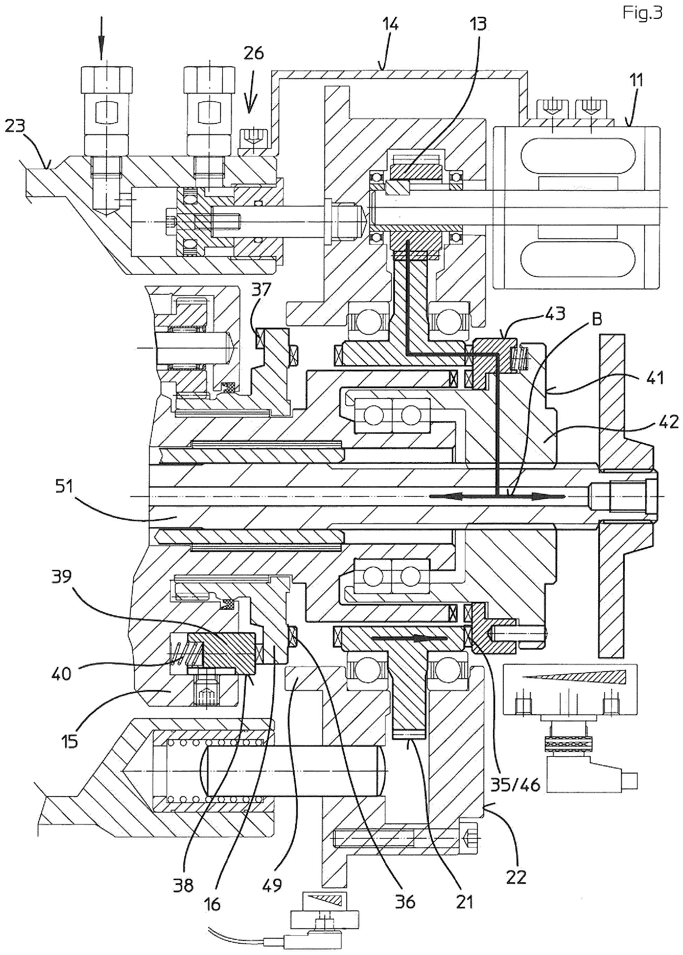

Um das Spannaggregat 1 zusätzlich bei weiteren als den diesen zugeordneten üblichen Arbeitsvorgängen einsetzen zu können, ist dem Antriebsmotor 11 ein axial gesteuert verstellbares Schaltglied 21 zugeordnet, das mit Hilfe einer Servo-Einrichtung 26 gesteuert verstellbar und in Mittelstellung sowie in den beiden Endstellungen arretierbar ist. Bei der Ausgestaltung nach Figur 1 ist der Antriebsmotor 11 dazu an einem zweiteiligen Gehäuse 22 angeflanscht, in dem das Schaltglied 21 eingesetzt und verschiebbar auf Führungsbolzen 24 gelagert ist, die in in das Gehäuse 22 eingearbeitete Bohrungen 25 eingreifen und an Trägern 23 befestigt sind. Die Träger 23 wiederrum sind an dem Spindelstock 6 abgestützt, und an einem der Träger 23 ist die Servo-Einrichtung 26 angebracht, die auf das Gehäuse 22, in dem mittels Wälzlager 32 das Schaltglied 21 drehbar gelagert ist, einwirkt. Dazu ist die Kolbenstange 29 eines in einem Zylinder 27 eingesetzten Kolbens 28 fest mit dem Gehäuse 22 verbunden, so dass bei einer Druckmittelzufuhr über die Zuführungsleitungen 30 bzw. 30' in einen der Druckräume 31 oder 31' das Gehäuse 22 und mit diesem das Schaltglied 21 aus der in Figur 1 dargestellten Mittelstellung in eine der beiden Endstellungen gemäß den Figuren 2 oder 3 verschoben werden kann.

Das Schaltglied 21 ist im Querschnitt umgekehrt T-förmig gestaltet, wobei an dessen nach außen ragenden Steg 21' eine Verzahnung 33 angearbeitet ist, in die ein auf der Abtriebswelle 12 des Antriebsmotors 11 angeordnetes Ritzel 13 eingreift. Die beiden waagrecht verlaufenden Stege 21" sind ebenfalls mit Stirnverzahnungen 34 und 35 ausgestattet, die zur Bildung unterschiedlicher Betriebszustände, wie dies in den Figuren 2 und 3 gezeigt ist, mit Bauteilen des Spannaggregates 1 oder einem Verstellglied 51 zusammenwirken.

Bei der Ausgestaltung nach Figur 1 ist der Antriebsmotor 11 fest an dem Gehäuse 22 angebaut und zusammen mit diesem axial gesteuert verschiebbar. Gemäß den Figuren 2 und 3 kann der Antriebsmotor 11 aber auch an einem Bügel 14 ortsfest aufgehängt sein, der an einem der Träger 23 befestigt ist. Die Abtriebswelle 12 des Antriebsmotors 11 ist bei dieser Ausführungsvariante verschiebbar in dem Ritzel 13 gelagert.

In der in Figur 1 dargestellten Mittelstellung des Schaltgliedes 21 ist das Spannaggregat 1 mit der Maschinenspindel 5 fest verbunden, so dass die Spannbacken 4 des Kraftspannfutters 3 die eingenommene Lage beibehalten und das in diesem eingespannte Werkstück 10 bearbeitet werden kann. Die dazu erforderliche Spannkraft wird zuvor in der in Figur 2 gezeigten Betriebsstellung in das Kraftspannfutter 3 eingebracht. Ein Kraftfluss zwischen dem Antriebsmotor 11 und dem Kraftspannfutter 3 ist gemäß der eingezeichneten Linie A in diesem Fall gegeben. Die Stirnverzahnung 34 des Schaltgliedes 21 ist in diesem Betriebszustand in die an einem mit einer Glocke 15 drehfest verbundenen Bauteil 16 angearbeitete Verzahnung 36 eingerückt.

Um in dem Betriebszustand nach Figur 1 ein selbsttätiges Lösen des Kraftspannfutters 3 auszuschließen, ist das Spannaggregat 1 zu blockieren. Dies wird dadurch bewerkstelligt, dass das in den Antriebsstrang des Spannaggregates 1 eingesetzte Bauteil 16 mit einer Stirnverzahnung 37 versehen ist, und in eine mit der Maschinenspindel 5 verbundenen Glocke 15 sind mehrere Federrasten 38 eingesetzt, die mit der Stirnverzahnung 37 zusammenwirken. Bei in die Stirnverzahnung 37 eingreifenden Federrasten 38, die jeweils durch entgegen der Kraft von Druckfedern 40 verschiebbare mit Verzahnungen versehene Bolzen 39 gebildet sind, sind somit die verstellbaren Bauteile des Spannaggregates mit der Maschinenspindel 5 fest verbunden und durch die Glocke 15 blockiert. Zum Lösen dieser Verbindung dienen an dem verschiebbaren Gehäuse 22 angeformte Anschläge 49, mit deren Hilfe die Federrasten 38, wie dies in Figur 2 gezeigt ist, ausgerückt werden können.

In der in Figur 3 dargestellten Betriebsstellung wird die Antriebskraft des Antriebsmotors 11, wie dies durch die Linie B gekennzeichnet ist, dem Verstellglied 51, das ebenfalls in Form einer Zugstange ausgebildet ist und auf eine Hilfseinrichtung 52 einwirkt, zugeleitet. Um dies zu ermöglichen, ist auf dem axial zu verschiebenden Verstellglied 51 ein Zwischenglied 41 in Form einer zweiteiligen Ringscheibe 42 und 43 angeordnet, die als Mutter wirkt und über Gewinde 48 mit dem Verstellglied 51 trieblich verbunden ist. Zwischen den beiden Ringscheiben 42 und 43, die über Bolzen 45 drehfest aufeinander verschiebbar gehalten sind, sind Druckfedern 44 eingesetzt, so dass die dem Schaltglied 21 zugekehrte Ringscheibe 43, an der zwei Stirnverzahnungen 46 und 47 angearbeitet sind, als Federraste 38 wirksam ist.

In die Verzahnung 46 der Ringscheibe 43 ist, wie dies der Figur 3 zu entnehmen ist, die Stirnverzahnung 35 des Schaltgliedes 21 einführbar. Über die Verzahnung 47 kann dagegen gemäß Figur 2 eine Triebverbindung mit der Glocke 15 bewerkstelligt werden, so dass auf diese Weise in Neutralstellung des Schaltgliedes 21 auch die Hilfseinrichtung 52 nicht betätigt werden kann.

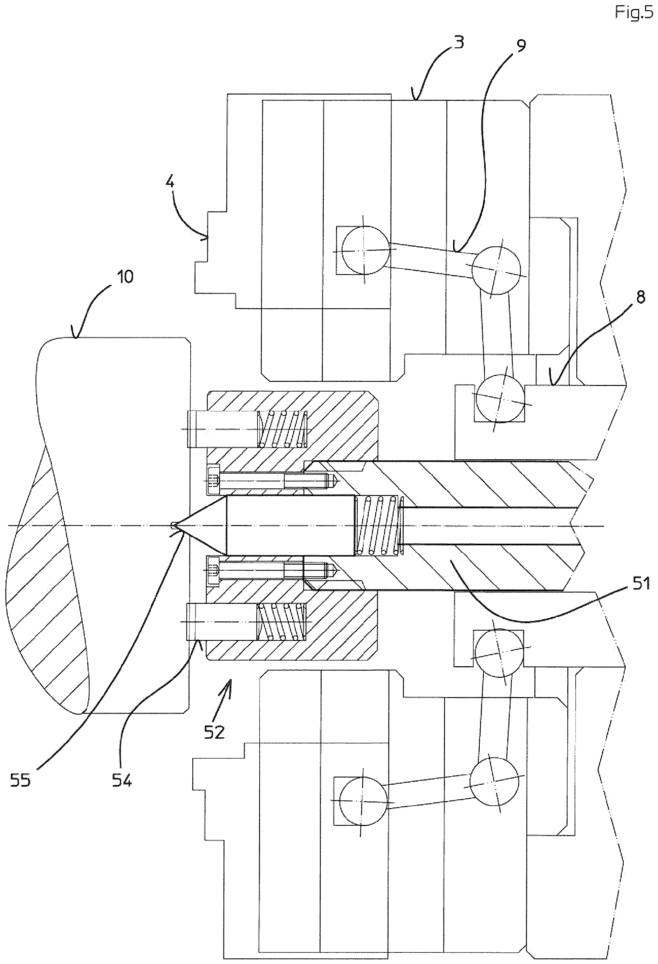

Die Hilfseinrichtung 52 kann unterschiedlich ausgebildet werden. Nach den Figuren 1 und 5 kann diese als kontrolliert verstellbarer Anschlag 53, als Drehmitnehmer 54 oder als Körnerspitze 55 ausgebildet sein, so dass mit einer mit dem Spannaggregat 1 ausgestatteten Werkzeugmaschine 2 zusätzlich zu den mit Hilfe des Spannaggregates 1 vorzunehmenden Arbeitsgängen weitere Bearbeitungen eines Werkstückes durchgeführt werden können. Die Hilfseinrichtung 52 kann aber auch als in das Kraftspannfutter 3 integriertes Spannglied ausgebildet werden.

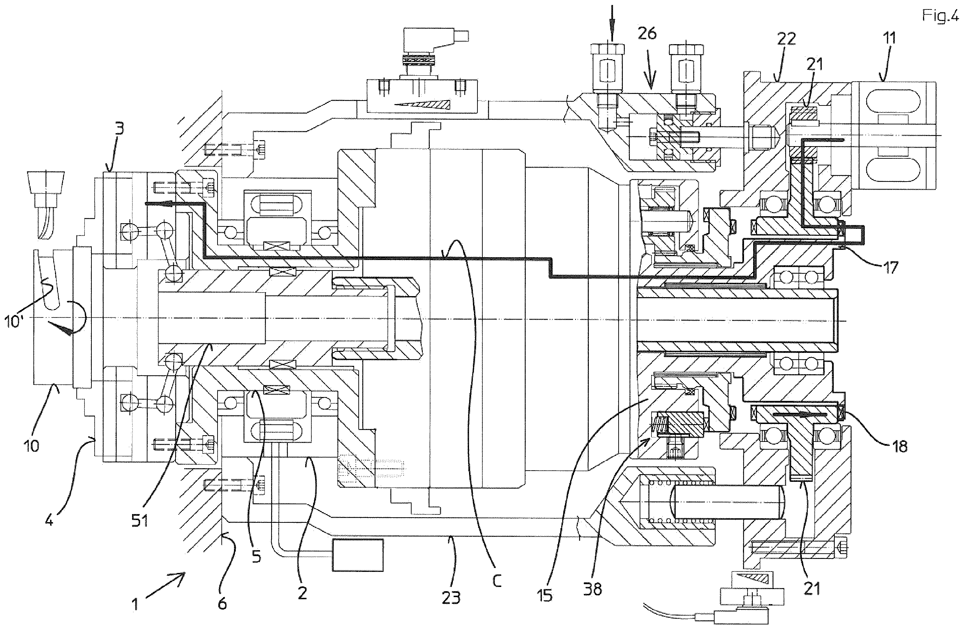

Die Antriebskraft des Antriebsmotors 11 kann dem Kraftspannfutter 3 auch in Form einer Rotationsbewegung zugeleitet werden, um z.B. in die Außenmantelfläche des Werkstückes 10 eine Nut 10' oder Bohrungen einzuarbeiten. Dazu ist lediglich gemäß der Darstellung in Figur 4 (Linie C) das Schaltglied 21 in der einen Endstellung über die Stirnverzahnung 35 mit dem über die Federrasten 38 verriegelten Spannaggregat 1 zu koppeln, in dem das Schaltglied 21 in eine in einen Ansatz 17 der Glocke 15 eingearbeitete Verzahnung 18 eingeführt wird. Der Antriebsmotor 11 ist somit trieblich mit dem Kraftspannfutter 3 verbunden und dieses kann zusammen mit dem eingespannten Werkstück 10 kontrolliert verdreht werden.

Um den jeweiligen Betriebszustand einzelner Bauteile zu ermitteln, sind dem Spannaggregat 1 mehrere Wegmesseinrichtungen 61, 62 und 63 zugeordnet. Mit Hilfe der Wegmesseinrichtung 61 kann der Verstellweg des Verstellgliedes 51, an dem dazu eine Scheibe 64 angebracht ist, bestimmt werden. Über die Wegmesseinrichtung 62, die mit einem ringförmig ausgebildeten an dem Gehäuse 22 angeformten Ansatz 65 zusammenwirkt, ist die jeweilige Lage des Gehäuses 22 und somit des in diesem eingesetzten Schaltgliedes 21 zu ermitteln. Auch die Wegmesseinrichtung 66 dient zur Lagebestimmung von Bauteilen des Spannaggregates 1, an denen dazu ein Ring 66 angebracht ist.

## Patentansprüche

1. Spannaggregat (1) für Werkzeugmaschinen (2), die mit einem Kraftspannfutter (3) zur Halterung eines Werkstückes (10) bestückt und dessen Spannbacken (4) mittels des Spannaggregates (1) über einen Bewegungswandler (7) und eine axial verstellbare Zugstange (8) betätigbar sind, wobei das Spannaggregat (1) einen mit dem Bewegungswandler (7) verbindbaren umschaltbaren elektrischen Antriebsmotor (11) zum Auslösen von Spannbewegungen aufweist, **dadurch gekennzeichnet, dass** dem Antriebsmotor (11) ein in Mittelstellung oder die eine oder die andere Endstellung axial gesteuert verstellbares und durch diesen unmittelbar oder über Zwischenglieder antreibbares Schaltglied (21) zugeordnet ist, dass zum Lösen und/oder Spannen des Kraftspannfutters das Schaltglied (21) form- oder kraftschlüssig in der einen Endstellung mit Bauteilen des Kraftspannfutters (3), und in der anderen Endstellung mit einem axial verschiebbaren Verstellglied (51) verbindbar ist, das mit einer Hilfseinrichtung (52) der Werkzeugmaschine (2) koppelbar ist, und dass zur lagerorientierten Verdrehung des Kraftspannfutters (3) das Schaltglied (21) in der Mittelstellung mit dem Antriebsmotor (11) über Bauteile des Spannaggregat (1) drehfest verbindbar ist und dass das Schaltglied (21) in einer oder beiden Endstellungen mit der Maschinenspindel (5) der Werkzeugmaschine (2) lösbar verriegelbar ist.

2. Spannaggregat nach Anspruch 1, **dadurch gekennzeichnet, dass** das Schaltglied (21) in einem Gehäuse (22) als Zwischenstück drehbar gelagert ist, das mit dem Spindelstock (6) der Werkzeugmaschine (2) drehtest verbunden und gesteuert axial verschiebbar gelagert ist.

3. Spannaggregat nach Anspruch 2, **dadurch gekennzeichnet, dass** das vorzugsweise zweiteilige Gehäuse (22) auf mehreren gleichmäßig über den Umfang verteilt angeordneten Führungsbolzen (24) abgestützt ist, die in ortsfest angeordneten bzw. an dem Spindelstock (6) befestigten Trägern (23) verschiebbar eingesetzt sind.

4. Spannaggregat nach Anspruch 3, **dadurch gekennzeichnet, dass** zur gesteuerten axialen Verschiebung des das Schaltglied (21) aufnehmenden Gehäuses (22) eine Servo-Einrichtung (26) in Form eines in einen Zylinder (27) eingesetzten und beidseitig von Druckmittel beauflagbaren Kolbens (28) vorgesehen ist, dessen Kolbenstange (29) mit dem Schaltglied (21) in Triebverbindung steht.

5. Spannaggregat nach einem oder mehreren der Ansprüche 1 bis 4, **dadurch gekennzeichnet, dass** der Antriebsmotor (11) ortsfest an dem Gehäuse (23) oder einem der mit dem Spindelstock (6) verbundenen Trägern (23) abgestützt ist und dass die Abtriebswelle (12) des Antriebsmotors (11) formschlüssig mit dem Schaltglied (21) verbunden bzw. mit diesem koppelbar ist.

6. Spannaggregat nach einem oder mehreren der Ansprüche 1 bis 5, **dadurch gekennzeichnet, dass** in Betriebsstellung des Spannaggregates (1) dieses mit einer dessen Bauteile aufnehmenden und mit der Maschinenspindel (5) drehfest verbundenen Glocke (15) lösbar verriegelbar ist.

7. Spannaggregat nach Anspruch 6, **dadurch gekennzeichnet, dass** zur formschlüssigen Verbindungen des Spannaggregates (1) mit der Glocke (15) in diese oder ein Zwischenglied (41) eine oder mehrere Federrasten (38) eingesetzt sind, die in den Endstellungen des Schaltgliedes (21) mittels an diesem oder dem Gehäuse (22) angeformten Anschläge (49) oder unmittelbar durch das Schaltglied (21) entsperrbar sind.

8. Spannaggregat nach einem oder mehreren der Ansprüche 1 bis 7, **dadurch gekennzeichnet, dass** das Schaltglied (21) in den beiden Endstellungen über seitlich an diesem angebrachte Stirnverzahnungen (34, 35) oder Reibbeläge wechselweise mit der Glocke (15) des Spannaggregat (1) oder dem als Mutter ausgebildeten Zwischenglied (41) des Antriebsmotors (11), das mit dem Verstellglied (31) über Gewinde (48) zur Umwandlung der Drehbewegungen in axiale Verstellbewegungen trieblich verbunden ist, form- oder kraftschlüssig koppelbar ist.

9. Spannaggregat nach Anspruch 8, **dadurch gekennzeichnet, dass** das Zwischenglied (41) als zweiteilige Ringscheibe (42, 43) ausgebildet ist, deren beide Teile drehfest und verschiebbar aufeinander gelagert und zwischen denen eine oder mehrere Druckfedern (44) angeordnet sind, derart, dass das mit dem Schaltglied (21) zusammenwirkende Ringteil (43) die Federraste bildet.

10. Spannaggregat nach einem oder mehreren der Ansprüche 1 bis 9, **dadurch gekennzeichnet, dass** das Schaltglied (21) mit einem Eingangsglied des Spannaggregates (1) bzw. der Glocke (15) und/oder dem Zwischenglied (41) und/oder diese mit der Glocke (15) jeweils über Stirnverzahnungen (34, 35, 46, 47) formschlüssig miteinander verbindbar sind.

11. Spannaggregat nach einem oder mehreren der Ansprüche 1 bis 10, **dadurch gekennzeichnet, dass** das Schaltglied (21) im Querschnitt umgekehrt T-förmig ausgebildet ist, dessen nach außen ragender Steg (21') mit dem Antriebsmotor (11) koppelbar und an dessen waagrecht verlaufende Stege (21") die Stirnverzahnungen (34, 35) angearbeitet sind.

12. Spannaggregat nach einem oder mehreren der Ansprüche 1 bis 11, **dadurch gekennzeichnet, dass** das Gehäuse (21) und/oder das Zwischenglied (41) und/oder das Spannaggregat (1) zur Ermittlung des jeweiligen Betriebszustandes des zugeordneten Bauteils mit Wegmesseinrichtungen (61, 62, 63) versehen sind.

13. Spannaggregat nach einem oder mehreren der Ansprüche 1 bis 12, **dadurch gekennzeichnet, dass** der Bewegungswandler (7) des Spannaggregates (1) durch mehrere mit Abstand zu dessen Längsachse und gleichmäßig über den Umfang verteilt angeordnete Kugelrollspindeln (7') oder Planetenrollspindeln (7") gebildet ist.

14. Spannaggregat nach einem oder mehreren der Ansprüche 1 bis 12, **dadurch gekennzeichnet, dass** die durch das Verstellglied (51) betätigbare Hilfseinrichtung (52) als axial einstellbarer Anschlag (53), als Drehmitnehmer (54), als Körnerspitze (55) oder als in das Kraftspannfutter 3 integriertes Spannglied ausgebildet ist.

## Claims

1. Clamping unit (1) for tool machines (2) which are equipped with a heavy-duty chuck (3) for mounting a workpiece (10) and the clamping jaws (4) of which can be actuated by means of the clamping unit (1) via a movement converter (7) and an axially adjustable draw rod (8), wherein the clamping unit (1) has a reversible electric drive motor (11) which is connectable to the movement converter (7) to trigger clamping movements, **characterised in that** to the drive motor (11) is assigned a switching element (21) which is adjustable axially in controlled manner in central position or the one or the other end position and can be driven by the latter directly or via intermediate elements, **in that** to release and/or clamp the heavy-duty chuck, the switching element (21) is connectable positively or non-positively in the one end position to components of the heavy-duty chuck (3), and in the other end position to an axially displaceable adjusting element (51) which can be coupled to an auxiliary device (52) of the tool machine (2), and **in that** for bearing-orientated rotation of the heavy-duty chuck (3), the switching element (21) is connectable to be resistant to rotation in the central position to the drive motor (11) via components of the clamping unit (1) and **in that** the switching element (21) is lockable to be releasable in one or both end positions with the machine spindle (5) of the tool machine (2).

2. Clamping unit according to claim 1, **characterised in that** the switching element (21) is mounted to be rotatable in a housing (22) as an intermediate piece which is connected to be resistant to rotation to the headstock (6) of the tool machine (2) and mounted to be axially displaceable in controlled manner.

3. Clamping unit according to claim 2, **characterised in that** the preferably two-part housing (22) is supported on several guide bolts (24) arranged uniformly distributed over the circumference and which are inserted to be displaceable in carriers (23) arranged to be fixed or attached to the headstock (6).

4. Clamping unit according to claim 3, **characterised in that** for controlled axial displacement of the housing (22) receiving the switching element (21), a servo device (26) in the form of a piston (28) inserted in a cylinder (27) and which can be exposed to pressure means on both sides is provided, the piston rod (29) of which is in driving connection with the switching element (21).

5. Clamping unit according to one or more of claims 1 to 4, **characterised in that** the drive motor (11) is supported to be fixed on the housing (23) or one of the carriers (23) connected to the headstock (6) and **in that** the drive shaft (12) of the drive motor (11) is connected positively to the switching element (21) or can be coupled to the latter.

6. Clamping unit according to one or more of claims 1 to 5, **characterised in that** in the operating position of the clamping unit (1), the latter is lockable to be releasable with a bell housing (15) receiving components thereof and connected to be resistant to rotation to the machine spindle (5).

7. Clamping unit according to claim 6, **characterised in that** for positive connections of the clamping unit (1) to the bell housing (15), one or more spring catches (38) are inserted into the latter or an intermediate element (41) and in the end positions of the switching element (21) are unlockable by means of stops (49) integrally moulded on the latter or the housing (22) or directly by the switching element (21).

8. Clamping unit according to one or more of claims 1 to 7, **characterised in that** the switching element (21) can be coupled positively or non-positively in the two end positions via end-face gearings (34, 35) attached to the latter laterally or friction linings alternately to the bell housing (15) of the clamping unit (1) or the intermediate element (41) of the drive motor (11) formed as a nut which is in driving connection with the adjusting element (31) via screw threads (48) for converting the rotary movements into axial adjusting movements.

9. Clamping unit according to claim 8, **characterised in that** the intermediate element (41) is formed as a two-part ring wheel (42, 43), both parts of which are mounted one on another to be resistant to rotation and displaceable and between which one or more compression springs (44) are arranged such that the ring part (43) cooperating with the switching element (21) forms the spring catch.

10. Clamping unit according to one or more of claims 1 to 9, **characterised in that** the switching element (21) is connectable positively to an input element of the clamping unit (1) or the bell housing (15) and/or the intermediate element (41) and/or the latter is connectable positively to the bell housing (15) respectively via end-face gearings (34, 35, 46, 47).

11. Clamping unit according to one or more of claims 1 to 10, **characterised in that** the switching element (21) is formed to have an inverted T shape in cross-section, the outwardly projecting bar (21') of which can be coupled to the drive motor (11) and the end-face gearings (34, 35) are attached to its horizontally running bars (21").

12. Clamping unit according to one or more of claims 1 to 11, **characterised in that** the housing (21) and/or the intermediate element (41) and/or the clamping unit (1) are provided with path-measuring devices (61, 62, 63) to ascertain the respective operational state of the assigned component.

13. Clamping unit according to one or more of claims 1 to 12, **characterised in that** the movement converter (7) of the clamping unit (1) is formed by several ball roller spindles (7') or planet roller spindles (7") arranged with distance from its longitudinal axis and distributed uniformly over the circumference.

14. Clamping unit according to one or more of claims 1 to 12, **characterised in that** the auxiliary device (52) which can be actuated by the adjusting element (51) is formed as an axially adjustable stop (53), as a rotary drive (54), as a lathe centre (55) or as a clamping element integrated in the heavy-duty chuck (3).

## Revendications

1. Groupe de serrage (1) pour des machines-outils (2) qui sont équipées d'un mandrin de serrage (3) pour la fixation d'une pièce (10) et dont les mors de serrage (4) peuvent être actionnés au moyen du groupe de serrage (1) par l'intermédiaire d'un convertisseur de mouvements (7) et d'une tige de traction (8) pouvant être ajustée axialement, dans lequel le groupe de serrage (1) présente un moteur d'entraînement (11) électrique commutable pouvant être relié au convertisseur de mouvements (7), pour déclencher des mouvements de serrage, **caractérisé en ce qu'**est associé au moteur d'entraînement (11) un organe de commutation (21) pouvant être ajusté de manière commandée axialement dans une position centrale ou dans l'une ou l'autre position d'extrémité et pouvant être entraîné par celui-ci directement ou par l'intermédiaire d'organes intermédiaires, que pour desserrer et/ou serrer le mandrin de serrage, l'organe de commutation (21) peut être relié par complémentarité de forme ou par force dans une position d'extrémité à des composants du mandrin de serrage (3) et, dans l'autre position d'extrémité, à un organe d'ajustement (51) pouvant être coulissé axialement qui peut être couplé à un dispositif auxiliaire (52) de la machine-outil (2), et qu'aux fins de la rotation orientée en position du mandrin de serrage (3), l'organe de commutation (21) peut être relié de manière solidaire en rotation dans la position centrale au moteur d'entraînement (11) par l'intermédiaire de composants du groupe de serrage (1), et que l'organe de commutation (21) peut être verrouillé de manière amovible à la broche de machine (5) de la machine-outil (2) dans une ou dans les deux positions d'extrémité.

2. Groupe de serrage selon la revendication 1, **caractérisé en ce que** l'organe de commutation (21) est monté de manière à pouvoir tourner en tant que pièce intermédiaire dans un boîtier (22) qui est relié de manière solidaire en rotation à la poupée porte-broche (6) de la machine-outil (2) et est monté de manière à pouvoir coulisser axialement de manière commandée.

3. Groupe de serrage selon la revendication 2, **caractérisé en ce que** le boîtier (22) de préférence en deux parties est soutenu sur plusieurs tiges de guidage (24) disposés de manière répartie de manière homogène sur la périphérie, qui sont insérés de manière à pouvoir coulisser dans des supports (23) disposés de manière stationnaire ou fixés sur la poupée porte-broche (6).

4. Groupe de serrage selon la revendication 3, **caractérisé en ce qu'**est prévu, aux fins du coulissement axial commandé du boîtier (22) recevant l'organe de commutation (21), un dispositif servo (26) sous la forme d'un piston (28) inséré dans un cylindre (27) et pouvant être soumis de part et d'autre à l'action d'un moyen sous pression, dont la tige de piston (29) est reliée en transmission à l'organe de commutation (21).

5. Groupe de serrage selon l'une ou plusieurs des revendications 1 à 4, **caractérisé en ce que** le moteur d'entraînement (11) est soutenu de manière stationnaire sur le boîtier (23) ou sur un des supports (23) reliés à la poupée porte-broche (6), et que l'arbre de sortie (12) du moteur d'entraînement (11) est relié par complémentarité de forme à l'organe de commutation (21) ou peut être couplé à celui-ci.

6. Groupe de serrage selon l'une ou plusieurs des revendications 1 à 5, **caractérisé en ce que** dans la position de fonctionnement du groupe de serrage (1), celui-ci peut être verrouillé de manière amovible à une cloche (15) recevant ses composants et reliée de manière solidaire en rotation à la broche de machine (5).

7. Groupe de serrage selon la revendication 6, **caractérisé en ce qu'**aux fins de la liaison par complémentarité de forme du groupe de serrage (1) à la cloche (15), une ou plusieurs encoches à ressort (38) sont insérées dans celle-ci ou dans un organe intermédiaire (41), lesquelles peuvent être débloquées dans les positions d'extrémité de l'organe de commutation (21) au moyen de butées (49) formées sur celui-ci ou sur le boîtier (22) ou directement par l'organe de commutation (21).

8. Groupe de serrage selon l'une ou plusieurs des revendications 1 à 7, **caractérisé en ce que** l'organe de commutation (21) peut être couplé par complémentarité de forme ou par force, dans les deux positions d'extrémité, par l'intermédiaire de dentures frontales (34, 35) ou de garnitures de friction installées latéralement sur celui-ci, en alternance à la cloche (15) du groupe de serrage (1) ou l'organe intermédiaire (41) du moteur d'entraînement (11) réalisé en tant qu'écrou, qui est relié en transmission à l'organe d'ajustement (31) par l'intermédiaire de filetages (48) pour convertir des mouvements de rotation en des mouvements d'ajustement axiaux.

9. Groupe de serrage selon la revendication 8, **caractérisé en ce que** l'organe intermédiaire (41) est réalisé en tant que disque annulaire (42, 43) en deux parties, dont les deux parties sont montées l'une sur l'autre de manière solidaire en rotation et de manière à pouvoir coulisser et entre lesquelles sont disposés un ou plusieurs ressorts de pression (44) de telle manière que la partie annulaire (43) coopérant avec l'organe de commutation (21) forme les encoches à ressort.

10. Groupe de serrage selon l'une des revendications 1 à 9, **caractérisé en ce que** l'organe de commutation (21) peut être relié par complémentarité de forme à un organe d'entrée du groupe de serrage (1) ou de la cloche (15) et/ou à l'organe intermédiaire (41) et/ou ceux-ci peuvent être reliés par complémentarité de forme à la cloche (15) respectivement par l'intermédiaire de dentures frontales (34, 35, 46, 47).

11. Groupe de serrage selon l'une ou plusieurs des revendications 1 à 10, **caractérisé en ce que** l'organe de commutation (21) est réalisé dans la section transversale en forme de T inversé, dont la lame dépassant vers l'extérieur (21') peut être couplée au moteur d'entraînement (11) et sur les lames (21") s'étendant de manière horizontale duquel les dentures frontales (34, 35) sont formées.

12. Groupe de serrage selon l'une ou plusieurs des revendications 1 à 11, **caractérisé en ce que** le boîtier (21) et/ou l'organe intermédiaire (41) et/ou le groupe de serrage (1) sont pourvus de dispositifs de mesure de déplacement (61, 62, 63) pour déterminer l'état de fonctionnement respectif du composant associé.

13. Groupe de serrage selon l'une ou plusieurs des revendications 1 à 12, **caractérisé en ce que** le convertisseur de mouvements (7) du groupe de serrage (1) est formé par plusieurs broches filetées à billes (7') ou broches filetées planétaires (7") disposées à distance par rapport à son axe longitudinal et disposées de manière répartie de façon homogène sur la périphérie.

14. Groupe de serrage selon l'une ou plusieurs des revendications 1 à 12, **caractérisé en ce que** le dispositif auxiliaire (52) pouvant être actionné par l'organe d'ajustement (51) est réalisé en tant qu'une butée (53) pouvant être réglée axialement, en tant qu'entraîneur en rotation (54), en tant que contre-pointe (55) ou en tant qu'organe de serrage intégré dans le mandrin de serrage (3).
